(19) Europäisches Patentamt
European Patent Office
Office européen des brevets

(11) **EP 2 154 949 B1**

(12) **EUROPEAN PATENT SPECIFICATION**

(45) Date of publication and mention
of the grant of the patent:
**01.12.2010 Bulletin 2010/48**

(21) Application number: **08774051.0**

(22) Date of filing: **04.06.2008**

(51) Int Cl.:
***A01J 25/16*** *(2006.01)* ***A23C 19/14*** *(2006.01)*

(86) International application number:
**PCT/EP2008/056942**

(87) International publication number:
**WO 2008/148820 (11.12.2008 Gazette 2008/50)**

(54) **NEW PROCESS FOR CHEESE RIPENING**

NEUES VERFAHREN ZUM REIFEN VON KÄSE

NOUVEAU PROCÉDÉ D'AFFINAGE DU FROMAGE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.06.2007 EP 07301084**

(43) Date of publication of application:
**24.02.2010 Bulletin 2010/08**

(73) Proprietor: **INSTITUT NATIONAL DE LA RECHERCHE AGRONOMIQUE**
**75007 Paris (FR)**

(72) Inventors:
 • **HELIAS, Arnaud**
   **F- 34000 Montpellier (FR)**
 • **CORRIEU, Georges**
   **F-78220 Viroflay (FR)**
 • **GUILLEMIN, Hervé**
   **F-25660 Montfaucon (FR)**
 • **PERRET, Bruno**
   **F-78910 Orgerus (FR)**
 • **PICQUE, Daniel**
   **F-78580 Maule (FR)**

(74) Representative: **Warcoin, Jacques**
   **Cabinet Régimbeau**
   **20, rue de Chazelles**
   **75847 Paris Cedex 17 (FR)**

(56) References cited:
   **EP-A- 0 789 198      EP-A1- 0 405 692**

 • **RIAHI ET AL: "Model for changes in weight and dry matter during the ripening of a smear soft cheese under controlled temperature and relative humidity" INTERNATIONAL DAIRY JOURNAL, ELSEVIER APPLIED SCIENCE, BARKING,, GB, vol. 17, no. 8, 13 April 2007 (2007-04-13), pages 946-953, XP022030693 ISSN: 0958-6946 cited in the application**
 • **RIAHI ET AL: "Model for changes in weight and dry matter during the ripening of a smear soft cheese under controlled temperature and relative humidity" INTERNATIONAL DAIRY JOURNAL, ELSEVIER APPLIED SCIENCE, BARKING,, GB, [Online] vol. 17, no. 8, 25 January 2007 (2007-01-25), pages 946-953, XP002451223 Retrieved from the Internet: URL:http://www.sciencedirect.com/science?_ob=ArticleURL&_udi=B6T7C-4MWXT79-1&_user=9 87766&_coverDate=08%2F31%2F2007&_alid=6208 58170&_rdoc=1&_fmt=full&_orig=search&_cdi= 5055&_sort=d&_docanchor=&view=c&_ct=1&_acc t=C000049880&_version=1&_urlVersion=0&_use rid=987766&md5=b044d90e95feca1f7eb9cc71f3 b c9e22> [retrieved on 2007-09-18]**
 • **TODT W: "REIFUNG UND LAGERUNG VON KASE UNTER KONTROLLIERTEN LUFTTECHNISCHEN BEDINGUNGEN" DEUTSCHE MOLKEREI ZEITUNG DMZ, VOLKSWIRTSCHAFTLICHER VERLAG GMBH. MUNCHEN, DE, vol. 111, no. 15, 11 April 1990 (1990-04-11), pages 472-475, XP000114013 ISSN: 0938-9369 cited in the application**

- **PICQUE D ET AL: "Effects of atmospheric composition on respiratory behavior, weight loss, and appearance of Camembert-type cheeses during chamber ripening" JOURNAL OF DAIRY SCIENCE, vol. 89, no. 8, August 2006 (2006-08), pages 3250-3259, XP002451160 ISSN: 0022-0302 cited in the application**

**Description**

Field of the invention

The present invention generally relates to a method for monitoring and modelling the cheese mass evolution during its ripening .

Background of the invention

The conventional technique for the ripening of cheese consists of the storage of the cheeses in cellars at a predetermined temperature and humidity at a temperature between 5°C and 25°C for a period of between about several days to several months depending on the cheese.

This ripening step is one of the most important steps of cheese-making processes. It is characterized by the development of a microbial consortium, which activities are responsible of important biological and physico-chemical changes occurring on the surface and the core of the curd as a function of ripening time (CHOISY et al., in Cheesemaking, from Science to Quality Assurance, A. Eck and J.C. Gillis ed. Lavoisier Publishing Paris, p:82-151, 2000). All biological activities are influenced by the ripening chamber atmosphere, especially its temperature, relative humidity and gas composition (RAMET et al., in Cheesemaking, from Science to Quality Assurance, A. Eck and J.C. Gillis ed. Lavoisier Publishing Paris, p:418-446, 2000; PICQUE et al., J. Dairy Sci., vol.89, p :3250-3259,2006).

In parallel of these transformations occurring on and in the curd, gases exchanges due to water evaporation and carbon dioxide emission are noted. RAMET *et al.* (2000, abovementioned) has estimated a cheese mass loss of 3 to 8 % at ripening room level according to the cheese-type.

From an industrial point of view, the mass loss has consequences on process productivity, more precisely for protected designation of origin (PDO) products for which the weight is a conformity criterion (e.g., Camembert-Normandie PDO and Epoisses PDO require a final weight of 0.25 kg).

Simultaneously, the ripening time is of great importance since the formation of the taste and texture is greatly dependent on the ripening progress. Moreover, kind, growth and activity of the ripening micro organisms are also of great importance.

Thus, the obtaining of a cheese having the desired characteristics (flavour, texture, colour and weight) implies a constant attention of the ripener on the cheese during the ripening process and constitutes a constant problem in the cheese industry.

TODT (Deutsche Molkerei Zeitung DMZ, vol.111 (15), 472475, 1990) teaches the interest of controlling temperature and humidity during a preripening step so as to obtain a desired percentage of weight loss. Some data described, for a specific air system monitoring device, the effects of temperature, air velocity and relative humidity on Holland type cheese mass loss. No modelling or mechanistic description of the phenomena of cheese weight loss are presented and the control of cheese mass loss is only hypothetic and empiric.

EP 0405 692 A1 discloses a process for preparing Maasdammer type cheese and more generally hard cheeses belonging to "Swiss-type cheese". EP 0405 692 A1 is focused on the means allowing a good master of the shape of Maasdammer type cheese, especially the cheese diameter controlled using a bandage. The salt intake is also controlled acting on the brining conditions (temperature, length) and the brine strength. This document teaches that cheese mass loss is linked to the relative humidity of this chamber, and propose a large range of possible humidity so as to limit and control the mass loss. Finally, this document does not provide any active modelling of cheese mass loss during ripening, nor any method for actively modifying the cheese mass loss during its ripening.

PICQUE et al. (J. Dairy Sci., vol.89, 3250-3259, 2006) measured the cheese respiratory activity as a function of ripening chamber gas composition. This document only discloses the effect of low concentrations of $CO_2$ on microbial growth and biochemical changes in cheese. Finally, some data described empirically the changes in cheese mass loss without any mechanistic explanation. Consequently, this document does not provide any model of cheese mass loss integrating simultaneously the effects of temperature, relative humidity, and $CO_2$ and/or $O_2$ concentrations, nor any method enabling to obtain a desired cheese mass at the end of the ripening period by adjusting some of these values on the basis of this model.

RIAHI et al. (International Dairy Journal, vol.17, 946-953, 2007) estimates the metabolism activity of the yeast *Debaryomyces hansenii* on the basis of the substrates (lactose and lactate) consumption by a yeast (data obtained after off line analysis of cheese samples). Moreover, the phase or ripening studied by these authors is limited to the step of curd (future cheese) deacidification and involve only one strain (the yeast *Debaryomyces hansenii*). The description of the cheese behaviour in 2 zones (inner and rind) is a schematic view far from a mechanistic description of the true occurring phenomena. In conclusion, this document does not disclose any model of cheese mass loss during ripening, which ripening implies a complex consortia of microorganisms. Furthermore, this document does not teach any method enabling to obtain a desired cheese mass at the end of the ripening period by adjusting some of the parameters of the ripening process on the basis of this model.

Summary of the invention

The present invention relates to a method for monitoring and modelling the cheese mass evolution according to claim 1.

In a preferred embodiment, said method is a method for manufacturing cheese having a final specific mass value, and further comprising the step of:

(ii) modifying the relative humidity in the ripening chamber for obtaining this final targeted cheese mass value.

In still another embodiment, the present invention relates to a computer program for controlling a computer to perform a method as described previously.

In still another embodiment, the present invention also relates to a computer readable medium containing a computer program as described previously.

Brief description of the drawings

Figure 1 shows the schematic representation of the model.

Figure 2 shows the data measured and calculated versus ripening time.

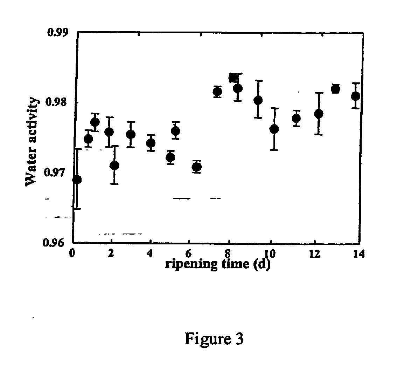

Figure 3 shows the experimental measurements of water activity carried out on the surfaces of the cheeses during the run 1.

Figure 4 shows the difference between the recorded cheese surface temperature ($T_s$) and the atmospheric temperature ($T_\infty$) versus ripening time.

Figure 5 shows the evolution of mass loss during the ripening time.

Figure 6 shows the schematic representation of an example device for implementing the method of the invention.

Figure 7 shows the temperature (—) and the relative humidity (__) measured in the ripening room during ripening of Camembert (Figure 7A) and of Saint-Nectaire (Figure 7C), and the evolution of measured (_) and calculated (—) of cheese mass loss during ripening of Camembert (Figure 7B) and of Saint-Nectaire (Figure 7D).

Figure 8 shows a schematic representation of the "respiratory ripening chamber" designed for determining with accuracy the cheese respiratory activity and mass loss.

Detailed description

The present invention is based on the discovery of a simple but accurate model of cheese mass loss dynamic during its ripening according to available on-line measurements associated with physical and biological phenomena. The model was afterwards fitted and validated on two experimental ripening trials, wherein the relative errors were less than 1.9 % and 32 % for the mass loss and the mass loss rate, respectively.

The present invention is directed to a method for monitoring and modelling the cheese mass evolution during its ripening, **characterised in that** said method comprises the steps of:

(i) determining, with an appropriate mass sensor the cheese mass during its ripening in a ripening chamber;

(i') determining the relative humidity and the temperature in the ripening chamber with appropriate sensors; and

(i") determining the $CO_2$ and/or $O_2$ concentration(s) in the ripening chamber 20 with appropriate sensor(s);

wherein the modelling of the cheese mass evolution during its ripening is obtained by the resolving of the following equations (1') 25 and (3'):

$$\frac{dm}{dt} = -sk\left[a_w.p_{sv}\left(T_s\right) - rh.p_{sv}\left(T_\infty\right)\right] \quad -sw_C r_{CO_2} \qquad (1')$$

and

$$\frac{dT_s}{dt} = \frac{s}{mC}\left(h(T_\infty - T_s) \quad +\varepsilon\sigma\left(T_\infty^4 - T_s^4\right) \quad -\lambda k\left[a_w.p_{sv}\left(T_s\right) - rh.p_{sv}\left(T_\infty\right)\right] \quad +\alpha r_{CO_2}\right) \quad (3')$$

which equations disclose respectively the evolution of the cheese mass (*dm*) and the evolution of the average cheese surface temperature ($dT_s$) as a function of time (*dt*), wherein:

* *m* is the cheese mass (kg),
* *t* is the time (s),
* *s* (m$^2$) is the useful surface exchange of the cheese, which is calculated from the product dimensions minus the surface of the grid support
* *k* is the average water transfer coefficient (kg.m$^{-2}$ .Pa$^{-1}$ .s$^{-1}$), it can be determined according to the heat transfer coefficient (*h*) by the following formula

be particularly as much advantageous t

* wherein *h* is the average convective heat transfer coefficient (W.m$^{-2}$.K$^{-1}$). This parameter influences the rate of heat transfer between cheeses and air according to air flow and cheese shape. It must be fitted for each ripening condition. *h* can be obtained by nonlinear least-square regression with the Levenberg-Marquardt method (MARQUARDT, SIAM J. Appl. Math., vol.11, p: 431-441, 1963) between estimated and measured mass for the different airflow conditions.
* $a_w$ is the cheese surface water activity (expressed between 0 and 1), it is the relative availability of water in a at the surface of the cheese. This parameter is not varying in large range for a given cheese-type and can be determined using a nondestructive method by using a device for measuring said surface water activity such as, for example, FA-ST LAB (GBX, Romans sur Isère, FR).
* $p_{sv}(T_*)$ is the saturation vapour pressure at the temperature $T_*$ (Pa). The saturation vapour pressure corresponds is the static pressure of a vapour when the vapour phase of water is in equilibrium with the liquid phase of water (when the air is saturated in water) and can be calculated, as an example, from the temperature with the GOFF-GRATCH equation (World Meteorological Organization. 2000. General meteorological standards and recommended practices, Appendix A, corrigendum. WMO Technical Regulations. Vol. 49. Geneva. CH).
* $T_s$ and $T_\infty$ are the average cheese surface and ripening chamber temperatures, respectively (K). The average ripening chamber temperature ($T_\infty$) is simply determined at a given time by the temperature sensor in the ripening chamber. The average cheese surface ($T_s$) at a given time is simply determined by the equation (3').
* *rh* is the relative humidity (expressed between 0 and 1 (0% to 100%)). The value of relative humidity is simply determined at a given time by the relative humidity sensor in the ripening chamber.
* $w_C$ is the molar masses (kg.mol$^{-1}$) of carbon, corresponding to 1.2 x 10$^{-2}$ kg.mol$^{-1}$.
* $r_{CO2}$ is the cheese $CO_2$ production rate (mol.m$^{-2}$.s$^{-1}$), which can be simply determined by the evolution of the $CO_2$ concentration in the ripening chamber.
* *C* is the cheese specific heat (J.kg$^{-1}$.K$^{-1}$), that corresponds to the heat energy required to raise the temperature of 1 kilogram of cheese by one degree kelvin (or Celsius). This parameters is not varying in large range for a given cheese-type and can be determined using a differential scanning calorimeter, such as PYRIS 1 (PERKIN ELMER LLC,).
* $\varepsilon$ is the cheese emissivity (dimensionless), it is the ratio of energy radiated by the cheese to energy radiated by a black body at the same temperature. The plaster value (0.91) can be used for different type of cheeses.

* σ is the Stefan-Boltzman constant (W.m$^{-2}$.K$^{-4}$), this physical constant can be easily found in the literature (for example PERRY and GREEN, Perry's Chemical Engineers' Handbook, McGraw-Hill. NY, 1997) and corresponds to 5.67 x 10$^{-8}$.

* α is the respiration heat (J.mol$^{-1}$), it corresponds to the heat produced by the respiration of 1 mole of carbon . As reference, the energy produced by the respiration of glucose is used (KANG and LEE, J. Food Eng., vol.35, p:65-73, 1998). Preferably, α corresponds to 4.693 x 10$^5$.

* λ is the water latent vaporization heat (J.kg$^{-1}$) that corresponds to the amount of energy in the form of heat absorbed by a substance during a change of the vaporization of one kilogram of water. These values can easily found in the literature (for example PERRY and GREEN, Perry's Chemical Engineers' Handbook, McGraw-Hill. NY, 1997), and corresponds to 2.4 x 10$^{-6}$.

The kind of cheese to which the present invention is applicable is not specifically restricted, and the present invention will be particularly as much advantageous to a kind of cheese which requires a short or a long term ripening.

As used herein, the expression "monitoring and modelling the cheese mass evolution during its ripening" refers to the cheese data and, optionally, the ripening chamber data acquisition and the comparison of said data to a reference profile in order to anticipate the cheese mass evolution during its ripening. Such reference profile may be obtained previously by the ripening of a cheese reference.

Optionally, said "monitoring and modelling the cheese mass evolution during its ripening" can be obtained by the cheese data and, optionally, the ripening chamber data acquisition and the integration of these data in the equations described hereafter in order to anticipate the cheese mass evolution during its ripening.

Generally, the typical method of producing cheese is well known from one of skill in the art and includes a preparatory step of the raw milk (standardisation, heat treatment, etc.), a step to add biological agents as starter material (such as lactobacilli and ripening micro organisms) and coagulating agents (such as rennet), a draining step to remove the whey from the curd, and a ripening step.

Mass sensors for the determination of the cheese mass are well known from one of skill in the art, and include, as an example, electronic balance. Such device can be positioned in order to measure the mass of a single cheese or a stack of cheeses.

Ripening chambers are also well known from one of skill in the art. As an example of such ripening chamber, one can cites the cellars corresponding to the traditional ripening chamber such as recent and complex devices such as those described in EP 0,307,049 B1, US 5,028,443 and FR 2,841,736 B1. As examples, industrial ripening chambers are available from SAFRAIR, CLAUGER and HEATCRAFT.

Said ripening chamber has defined temperature ($T_\infty$) and relative humidity ($rh$) depending on the cheese being ripened.

The relative humidity ($rh$) is a term used to describe the quantity of water vapour that exists in air. The relative humidity is defined as the ratio of the partial pressure of water vapor to the saturated vapor pressure of water at a given temperature, its values are expressed between 0 and 100 % or between 0 and 1 (85% corresponding to 0.85).

As an example, and for a soft cheese, the ripening chamber has a temperature ($T_\infty$) comprised between 10 and 15°C, a relative humidity comprised between 0.85 and 0.98, and the ripening time is comprised between 10 and 45 days.

Depending on the type of cheese, one of skill in the art can simply determinate the correct temperature and relative humidity during the ripening process in the ripening chamber.

Advantageously, the defined temperature in the ripening chamber is comprised superior or equal to 5°C, preferably said defined temperature is inferior or equal to 25°C.

Still advantageously, the defined relative humidity in the ripening chamber is comprised between 0.85 (85%) and 0.99 (99%), preferably said relative humidity is inferior or equal to 0.98 (98%).

The relative humidity and the temperature in the ripening chamber are determined with appropriate sensors, such sensors being well known from one of skill in the art.

As an example of relative humidity sensors, one can cite the sensors available from VAISSALA, GEFRAN or ROTRONIK.

Advantageously, the defined temperature and the relative humidity in the ripening chamber are maintained with appropriate means.

Such means enable to increase or decrease the temperature and/or the relative humidity in the ripening chamber for maintaining said characteristics at defined values for the ripening of a specific cheese. As an example of such means, which are well known from one of skill in the art, one can cites the means described in FR 2,841,736.

(i") In a preferred embodiment, the step of determining the $CO_2$ and/or $O_2$ concentration(s) in the ripening chamber with appropriate sensor(s) consists in determining the $CO_2$ concentration in the ripening chamber with an appropriate sensor.

As an example of $CO_2$ and $O_2$ concentration sensors, one can cite the sensors available from EDINBURGH INSTRUMENTS, FIGARO and CITY TECHNOLOGY.

The determination of the $CO_2$ and/or $O_2$ concentration in the ripening chamber enable to determinate the cheese respiratory activity. The determination of these parameters constitutes a major innovation and enable to models the cheese mass loss during ripening with a precision never obtained in the prior art.

According to a preferred embodiment, the method of the present invention is a method for manufacturing cheese having a final targeted mass value, and further comprising the step of:

(ii) modifying the relative humidity in the ripening chamber for obtaining this final targeted cheese mass value.

The final targeted (cheese) mass value depends on the manufactured type of cheese, and corresponds to a general knowledge of one of skill in the art (*e.g.*, 250 g for camembert).

Preferably, said final targeted cheese mass value is obtained by a specific cheese mass loss rate. In fact, the ripening process is associated with a biological activity, which necessitate a minimum time depending on the manufactured cheese. Thus, it is necessary that the rate of cheese mass loss be in concordance with the biological activity within the cheese for obtaining a cheese having the desired characteristics at the end of the ripening process.

According to still another preferred embodiment, the steps (i), (i'), (i"), and (ii) are automated. Such automation can be realized by means well known of one of skill in the art such as a programmed computer enabling the acquisition and the treatment of the measurements operated in the ripening chamber, and finally the control of the means maintaining the defined temperature and the relative humidity in the ripening chamber.

According to still another preferred embodiment, the relative humidity in the ripening chamber is modified at step (ii) from less than 3%, preferably from less than 2%, for controlling the cheese mass loss, and finally obtaining a ripened cheese having the desired mass. This modification of relative humidity is inferior to 3% in order not to disturb the biological activity during the cheese ripening.

As an example, the relative humidity in the ripening chamber is increased when the cheese mass loss and/or the cheese mass loss rate is insufficient, and is decreased when the cheese mass loss and/or the cheese mass loss rate is too much important. The yield of this modification of the relative humidity will depend of the desired cheese mass loss.

Advantageously, the modelling of the cheese mass evolution during its ripening is obtained by the resolving of the following equations (1) and (3):

$$\frac{dm}{dt} = s\left(w_{O_2} . r_{O_2} - w_{CO_2} . r_{CO_2} - k\left(a_w . p_{sv}(T_s) - rh . p_{sv}(T_\infty)\right)\right) \quad (1)$$

and

$$\frac{dT_s}{dt} = \frac{s}{m \cdot C}\left(h(T_\infty - T_s) + \varepsilon\sigma\left(T_\infty^4 - T_s^4\right) - \lambda k\left(a_w . p_{sv}(T_s) - rh . p_{sv}(T_\infty)\right) + \alpha \frac{r_{O_2} + r_{CO_2}}{2}\right) \quad (3)$$

which equations disclose respectively the evolution of the cheese mass (dm) and the evolution of the average cheese surface temperature ($dT_s$) as a function of time (dt), wherein:

* $w_{O2}$ and $w_{CO2}$ are the molar masses ($kg.mol^{-1}$) of oxygen and of carbon dioxide respectively, corresponding to $3.2 \times 10^{-2}$ and $4.4 \times 10^{-2} kg.mol^{-1}$, respectively.

* $r_{O2}$ is the cheese $O_2$ consumption rate ($mol.m^{-2}.s^{-1}$), which can be simply determined by the evolution of the $O_2$ concentration in the ripening chamber.

In these equations, the consumption of oxygen and the emission of carbon dioxide are considered independently, since they are both not equivalent for each type of cheese.

Still advantageously, and when the method of the invention corresponds to a method for manufacturing a cheese having a final specific mass value, the modification of the relative humidity of the ripening chamber for obtaining the desired cheese mass loss with time of step (ii) is obtained by the resolving the previously described equations.

Advantageously, the method of the present invention can be performed with a device comprising (i) a ripening chamber comprising:

a) at least one humidity sensor,
b) optionally, at least one mean for maintaining and modifying humidity in the ripening chamber,
c) at least one temperature sensor,
d) at least one mean for maintaining a determined temperature in the ripening chamber,
e) at least one cheese mass electronic balance, and
f) optionally, at least one $CO_2$ sensor and/or at least one $O_2$ sensor.

Said device can further comprise (ii) at least one programmed computer.

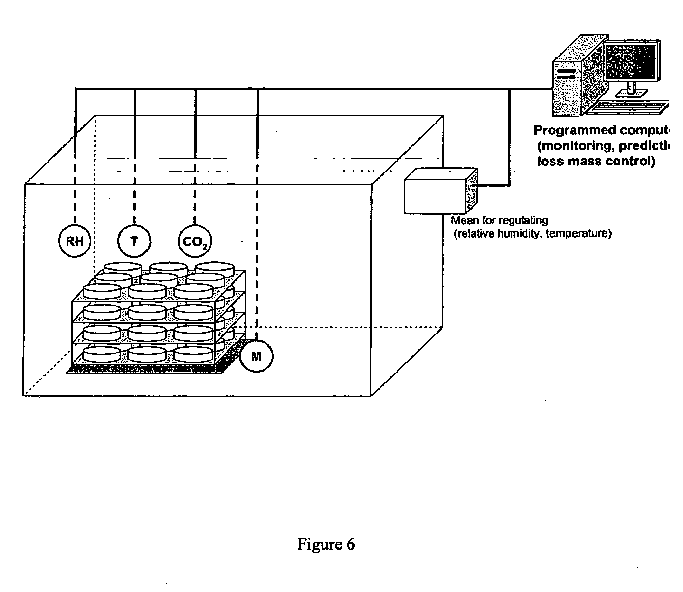

The figure 6 shows the schematic representation of an example device for implementing the method of the invention, wherein said device comprises (i) a ripening chamber comprising measurement devices for relative humidity (RH), temperature (T), $CO_2$ concentration ($CO_2$) and for cheese mass (M); (ii) a programmed computer for monitoring, predicting, and controlling cheese mass lass with time by the way of (iii) means for regulating relative humidity and temperature in the ripening chamber.

In another aspect, the present invention also provides a computer program for controlling a computer to perform a method as described previously.

Finally, the present invention also provides a computer readable medium containing a computer program as described previously.

In the following, the invention is described in more detail with the examples. Yet, no limitation of the invention is intended by the details of the examples.

<u>Examples</u>

<u>Example 1: modelling of cheese mass loss during Camember-type cheeses ripening</u>

After a description of ripening conditions and available measurements, the aim of this work was the modelling of cheese mass loss dynamic resulting from physical and biological phenomena.

<u>1) Materials and methods:</u>

***Cheesemaking and Ripening Chambers***

For the measurements, two runs were realized in two small ripening chambers of 0.91 m³ (1.9×0.8×0.6 m) for the trial 1, and 0.63 m³ (1.2×0.6×0.87 m) for the trial 2. In both cases, Camembert-type cheeses were manufactured using the protocol previously described by LECLERCQ-PERLAT et al. (J. Dairy Res., vol.71, p:346-354, 2004).

In complement to the lactic acid bacteria inoculate, a ripening microbial consortia composed by *Kluyveromyces marcianus, Geotrichum candidum, Penicillium camemberti* and *Brevibacterium aurantiacium* was used. After drainage, the moulded cheeses were transferred into the ripening chambers, placed into a refrigerated room to allow the temperature control close to 14°C ± 1°C.

***Data Acquisition.***

For each run, a cheese was continuously weighted using an electronic balance (Precisa XB620C, precision ±0.01 g, PRECISA). A combined sensor (Vaissala, Dewpoint transmitter HMP 243, ETOILE INTERNATIONAL) measured the chamber temperature and the relative humidity of the ripening chamber. It was 6 cm above the weighted cheese, a distance greater than thermal boundary layer according to HARRIS et al. (J. Food Eng., vol.61, p:421-429, 2004). To determine cheese and chamber temperatures, the averages of thermocouple measurements (K type, CORREGE TEMPERATURE) were carried out. 3 thermocouples were placed 0.01 m under the surface of a dedicated cheese (experimental constraints did not allowed to weight and to measure the temperatures for the same cheese) and three others ones 6 cm above. The thermocouples were gauged before the trial in a water bath (temperature: 10°C and 15°C) and the calibration was checked after the ripening in the same way.

Chamber atmospheric composition changes were also characterized with $CO_2$ (infrared analyzer Iridium 100, City technology, UK) and $O_2$ (electrochemical sensor CiTycel, City technology) sensors. To avoid too large $CO_2$ concentration into the ripening chamber (about 4 % for the run 1 and 2 % for the run 2), which induces cheese defaults (PICQUE *et al.,* 2006, abovementioned), a manual gas renewal was performed periodically.

When the ripening chamber was used without an input of air, the variations of $CO_2$ and $O_2$ concentrations were

depending only on the exchanges between the atmosphere and the cheeses. In order to study cheese respiration activity, cubic smoothing spline functions (MATLAB, The Mathworks, Natik, MA) were used to derivate the gas concentration as a function of time, then $CO_2$ production and $O_2$ consumption rate were obtained.

All on-line data (mass, temperature, relative humidity, $O_2$ and $CO_2$ concentrations) were carried out with a 6 minutes period acquisition on a computer.

Cheese water activity and specific heat were measured off-line, on some samples collected during the run 1. The water activity at the cheese surface was daily measured on each face of two cheeses, using a nondestructive method (FA-st lab, GBX). Measurements with a differential scanning calorimeter (Pyris 1, PERKIN ELMER LLC) equipped with a liquid nitrogen cooling accessory (CryoFill, PERKIN ELMER) were realized to determine specific heat.

### Run Description.

For the trial 1, 45 cheeses had been placed on two parallel trays, 22 cheeses for the run 2. Cheese radius and thickness were 5.5 and 3.5 cm, respectively. The initial mass of the weighted cheese was 330 g for the run 1 and 340 g for the run 2. For the run 1, the defrosting cycle of the refrigerated room had an 8 hours period. It induced an increase of 1°C during the first hour of the cycle and a relative humidity variation of 2 %. The relative humidity was manually controlled for the run 1 (through two cold traps placed inside the chamber) and automatically controlled for the run 2 (air was treated with a cold trap placed out of the chamber with a fan to manage air flow rate in this recirculation loop). With respect to Camembert making technology, the first ripening day was performed with a low value of relative humidity, close to 85 % in order to get a surface drying of the curd. The 13 following days of the run 1 were carried out with controlled variations of the relative humidity between 88 % and 94 %, in order to study the effect of the relative humidity on mass loss. For the run 2, the set point for the 13 following days was 92 % of relative humidity. To study the effect of air velocity on heat and mass transfer, fan was on between day 1 and day 7 and it was off the rest of the time. In all conditions, air velocities were lower than 0.1 m.s$^{-1}$.

### 2) Modelling

### Mass Loss

The cheese mass loss is the result of water evaporation (physical phenomenon) and of carbon dioxide release (biological phenomenon). The evaporative flux of water is a function of the difference of water vapour pressure between the ripening chamber and the cheese surface. Cheese surface water activity is a key parameter for this transfer. On food product, the link between water activity and water content is generally represented by sorption isotherm. Several empirical or semi-empirical models have been set up. The Guggenheim, Anderson, De Boer (GAB) equation is probably the most frequently used in food industry (CHIRIFE and IGLESIAS, J. Food Tech., vol.13, p:159-174, 1978). Water activity mainly results from ionic composition and water content. Another important effect for dairy products is the micelle structure, which depends on pH (RÜEGG and BLANC, J. Dairy Sci.., vol.59, p: 1019-1024, 1976). SAUREL et al. (J. Food Eng., vol.63, p: 163-170, 2004) have reviewed several studies on water activity modelling for cheese with various complexities. They underlined the difficulty to establish general relationships.

In this work, the following points were taking into account:

- Soft cheese water activity values are very high, up to 0.95 (Hardy, in Cheesemaking, from Science to Quality Assurance, A. Eck and J.C. Gillis ed. Lavoisier Publishing Paris, p: 60-81, 2000). Taking into account the sorption curve, important water content variations imply only small changes in water activity for values close to 1. According to the experimental water sorption isotherm shown by DESOBRY and HARDY (J. Food Sci., vol.59, p: 986-989, 1994), water content variation from 0.6 to 0.4 g$_{water}$/g$_{dry}$ matter (37.5 to 28.6 %) implies water activity changes from 0.97 to 0.95. The high water content (50 to 60 %) of the experimental cheeses allows us to suppose very small influence on water activity. Consequently, a relationship between water activity and water content of the cheese is not necessary for mass loss estimation.

- According to HARDY (Sci. Aliments., vol.5, p: 153-162, 1985), after 3 days of ripening, salt concentrations are similar in the core and in the rind of a Camembert. The small size of Camembert and its important water content could explain this fast equilibrium. Consequently, the brining influences the cheese water activity value but no significant variation of this factor occurred during the ripening.

Considering these aspects, the water activity was taken constant and none water or salt diffusion phenomena inside the cheese were represented.

Biological activities are characterized by oxygen consumption and carbon dioxide production, which induce a matter flux between the cheeses and the ripening chamber atmosphere. Other gaseous productions (like ammonia and aroma compounds) are considered as negligible in a mass dynamic point of view. Anaerobic pathways at core level cannot be neglected for the cheese taste elaboration but they are not significantly involved in mass loss. For Camembert-type cheeses, main part of the biological activity and gaseous exchange in ripening process are localized at the rind level (BLANC et al., Schweiz. Milchw. Forsch., vol.12(2), p :30-34, 1983). Aerobic pathways are prevailing when the respiration quotient (RQ) is near to one, which is the case for Camembert-type cheeses, (PICQUE *et al.,* 2006, above-mentioned). The $O_2$ consumption ($r_{O2}$) rate and the $CO_2$ production rate ($r_{CO2}$) (mol.m$^{-2}$.s$^{-1}$) were calculated from $CO_2$ and $O_2$ concentrations measured in the ripening chamber. The matter balance linked to respiration was obtained by the difference between these two rates.

For a given cheese, the rate of cheese mass ($m$ (kg)) variation is represented as follow (kg.d$^{-1}$):

$$\frac{dm}{dt} = s\left( w_{O_2} . r_{O_2} - w_{CO_2} . r_{CO_2} - k\left( a_w . p_{sv}(T_s) - rh.p_{sv}(T_\infty) \right) \right) \quad (1)$$

The constants used to cheese mass loss estimation are disclosed in table I.

Table I

| Parameter | Symbol | Value | SEM* |
|---|---|---|---|
| $O_2$ molar mass (kg.mol$^{-1}$) | $w_{O2}$ | $3.2 \times 10^{-2}$ | - |
| CO2 molar mass (kg.mol$^{-1}$) | $w_{CO2}$ | $4.4 \times 10^{-2}$ | - |
| Respiration heat (J.mol$^{-1}$) | $\alpha$ | $4.693 \times 10^5$ | - |
| Latent heat of water evaporation (J.kg$^{-1}$) | $\lambda$ | $2.47 \times 10^6$ | - |
| Product emissivity (dimensionless) | $\varepsilon$ | 0.91 | - |
| Stefan-Boltzmann constant (W.m$^{-2}$.K$^{-4}$) | $\sigma$ | $5.67 \times 10^{-8}$ | - |
| Surface area of cheese (m$^{2***}$) | $s$ | $2.6 \times 10^{-2}$ | - |
| Surface water activity (dimensionless) | $a_w$ | 0.976 | 0.001 |
| Specific heat (J.kg$^{-1}$.K$^{-1}$) | $C$ | $2.194 \times 10^3$ | 59 |
| * SEM = Standard error of the mean, used to experimental acquisitions. ** Latent heat of water evaporation value calculated at 14°C. *** Total surface of the cheese ($3.11 \times 10^{-2}$ m$^2$) less the surface covered by the grid ($0.51 \times 10^{-2}$ m$^2$) where the cheese is placed during the ripening. | | | |

$s$ (m$^2$) is the useful surface exchange of the cheese (see table I), calculated from the product dimensions minus the surface of the grid support (corresponding to 46 % of the inferior side).

$w_{O2}$ and $w_{CO2}$ are the molar masses (kg.mol$^{-1}$) of oxygen and carbon dioxide, respectively.

$a_w$ is the cheese surface water activity.

$T_s$ and $T_\infty$ are the average cheese surface and ripening chamber temperatures, respectively (K).

$rh$ is the relative humidity (expressed between 0 and 1).

$p_{sv}(T_*)$ is the saturation vapour pressure at the temperature $T_*$ (Pa), it was calculated from the temperature with the GOFF-GRATCH equation (World Meteorological Organization. 2000. General meteorological standards and recommended practices, Appendix A, corrigendum. WMO Technical Regulations. Vol. 49. Geneva. CH).

k is the average water transfer coefficient (kg.m$^{-2}$ .Pa$^{-1}$.s$^{-1}$). *k* was assumed constant for a given air flow pattern around the cheese (this point will be explained later).

***Cheese Surface Temperature.***

According to HARDY and SCHER (in Cheesemaking, from Science to Quality Assurance, A. Eck and J.C. Gillis ed. Lavoisier Publishing Paris, p: 447-473, 2000), the cheese heat conductivity varies between 0.3 to 0.4 W.m$^{-1}$.K$^{-1}$. Then, the cheese Biot number is comprised between 0.24 and 0.32. Consequently the heat conduction inside the product is very fast. There is no thermal gradient inside the cheeses and the cheese surface temperature is assumed as representative of the cheese temperature.

Direct heat exchange between the cheeses and their close atmosphere results from convective and radiative fluxes; in addition to these phenomena, the moisture loss induces an evaporative heat consumption flux. The cheese rind presents a high biological activity during the ripening, characterized by an important mycelium development. From an energetic point of view, fermentative pathways can be neglected, as described by PAJONK et. al. (J. Food Eng., vol. 57, p:72(2), p:231-243, 2003) for Emmental ripening heat transfer. In contrast, respiratory heat must be taken into account. As for several vegetal food product storage (KANG and LEE, J. Food Eng., vol.35, p:65-73, 1998; SONG et al., J. Food Eng., vol.53, p:103-109, 2002), the generic glucose aerobic respiration equation was used:

$$C_6H_{12}O_6 + 6\,O_2 \rightarrow 6\,CO_2 + 6\,H_2O + 2.816\times10^6 J\cdot mol^{-1} \qquad (2)$$

Equation (2) gives a RQ equal to 1 due to the equimolarity between $O_2$ and $CO_2$. In a cheese context, many substrates are oxidized (lactose, lactate, and partially lipids and proteins), that can induce RQ variation close to one. The variability of RQ was thus represented by the average of $r_{o2}$ and $r_{CO2}$.

From these considerations, the rate of cheese surface temperature variation is represented as follow:

$$\frac{dT_s}{dt} = \frac{s}{m\cdot C}\left( h\left(T_\infty - T_s\right) + \varepsilon\sigma\left(T_\infty^4 - T_s^4\right) - \lambda k\left(a_w.p_{sv}\left(T_s\right) - rh.p_{sv}\left(T_\infty\right)\right) + a\frac{r_{o_2}+r_{co_2}}{2}\right) \quad (3)$$

$C$ is the cheese specific heat ($J.kg^{-1}.K^{-1}$).

$h$ is the average convective heat transfer coefficient ($W.m^{-2}.K^{-1}$).

$\varepsilon$ is the cheese emissivity (dimensionless).

$\sigma$ is the Stefan-Boltzman constant ($W.m^{-2}.K^{-4}$).

$\alpha$ is the respiration heat for 1 mole of carbon dioxide release ($J.mol^{-1}$).

$\lambda$ is the water latent vaporization heat ($J.kg^{-1}$). It depends on ripening temperature but an average value can be taken with an error smaller than 0.2 % because of the low temperature changes (10 to 15°C) during ripening.

***Transfer coefficients.***

The effect of the small variation of temperature (less than 5°C) and relative humidity (less than 10 %) on the average convective heat and mass transfer coefficients, $h$ and $k$ respectively, can be neglected. Consequently, $h$ and $k$ are mainly determined by the cheese shape and the airflow properties (KONDJOYAN and DAUDIN, J. Food Eng., vol. 32, p:255-240, 1997). MIRADE *et al.* (2004, abovementioned) used the psychrometric method to determine the transfer coefficient values of a Camembert shape plaster object according to the average air flow $v$ ($m.s^{-1}$):

$$h=3.95e^{223\cdot} \ (W.m^{-2}.K^{-1}) \qquad\qquad (4)$$

$$k=2.92e^{-2\alpha\cdot}\ 10^{-8}\ (kg.m^{-2}.Pa^{-1}.s^{-1}) \qquad\qquad (5)$$

Unfortunately, these relations were not relevant for the very low air velocity measured in the studied ripening chambers (v was lower than 0.1 $m.s^{-1}$, data not shown) Indeed, OZISIK (Heat transfer: a basic approach. McGraw-Hill. NY, 1985) established the theoretical $h$ value (1.9 $W.m^{-2}.K^{-1}$) for a no stirred chamber, which is different of the result (3.95) obtained with equation (4).

Because of the high sensitivity of mass loss with respect to transfer coefficients, $h$ was obtained by nonlinear least-square regression with the Levenberg-Marquardt method (MARQUARDT, SIAM J. Appl. Math., vol.11, p: 431-441, 1963) between estimated and measured mass for the different airflow conditions. In this case, the following relation was established from equations (4) and (5):

$$k = 0.66.10^{-8}\, h^{1.09}\, (\text{kg.m}^{-2}.\text{Pa}^{-1}.\text{s}^{-1}) \qquad (6)$$

***Model Overview.***

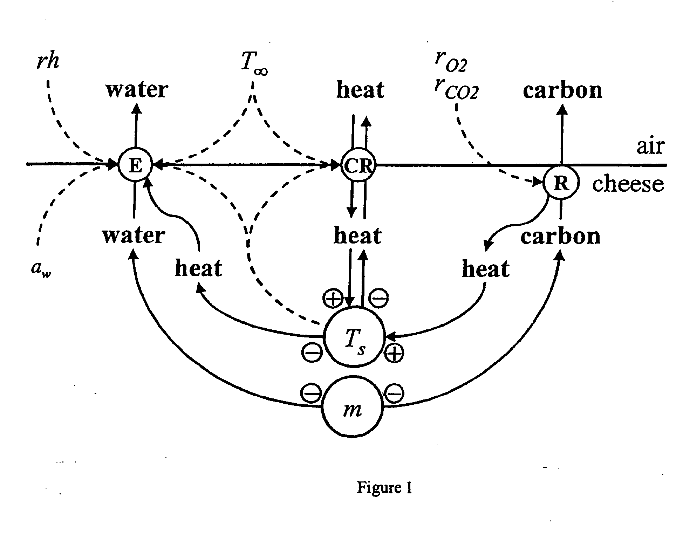

The figure 1 shows the schematic representation of the model with 4 input variables (relative humidity ($rh$), atmospheric temperature ($T_\infty$), oxygen consumption rate ($r_{o2}$), and carbon dioxide production rate ($r_{CO2}$)), and 2 state variables (surface temperature ($T_s$), and mass ($m$)). 3 main phenomena were taking into account:

- the water evaporation (E) inducing mass decrease and energy consumption,

- convective and radiative exchanges (CR): the convective and radiative heat fluxes, governed by the difference between the cheese surface and the chamber temperatures,

- respiratory activity (R): the exothermic respiratory metabolism, inducing a carbon loss.

A dashed arrow represents a variable influence on a phenomenon, a solid arrow shows the consequences (positive or negative) of a phenomenon on a state variable.

The model can be further simplified. Since the $O_2$ consumption ($r_{O2}$) rate and the $CO_2$ production rate ($r_{CO2}$) (mol.m$^{-2}$.s$^{-1}$) are nearly equivalent for most of the cheeses, it is possible to consider only one of this rate. As a consequence, it is possible to consider the variation in carbon as the result of $O_2$ consumption and $CO_2$ emission. The rate of cheese mass (m (kg)) variation can be then represented as follows:

$$\frac{dm}{dt} = -sk\left[a_w.p_{sv}\left(T_s\right) - rh.p_{sv}\left(T_\infty\right)\right] \; -sw_C r_{CO_2} \qquad (1')$$

Wherein $w_C$ is the molar masses (kg.mol$^{-1}$) of carbon. Then, this model enables to measure only $O_2$ consumption or $CO_2$ emission during ripening in order to evaluate the cheese mass loss with time.

The cheese temperature variation can be also simplified and be represented as follows:

$$\frac{dT_s}{dt} = \frac{s}{mC}\left(h\left(T_\infty - T_s\right) \; + \varepsilon\sigma\left(T_\infty^4 - T_s^4\right) \; - \lambda k\left[a_w.p_{sv}\left(T_s\right) - rh.p_{sv}\left(T_\infty\right)\right] \; + \alpha r_{CO_2}\right) \quad (3')$$

3) Results and discussion

***Run Description***

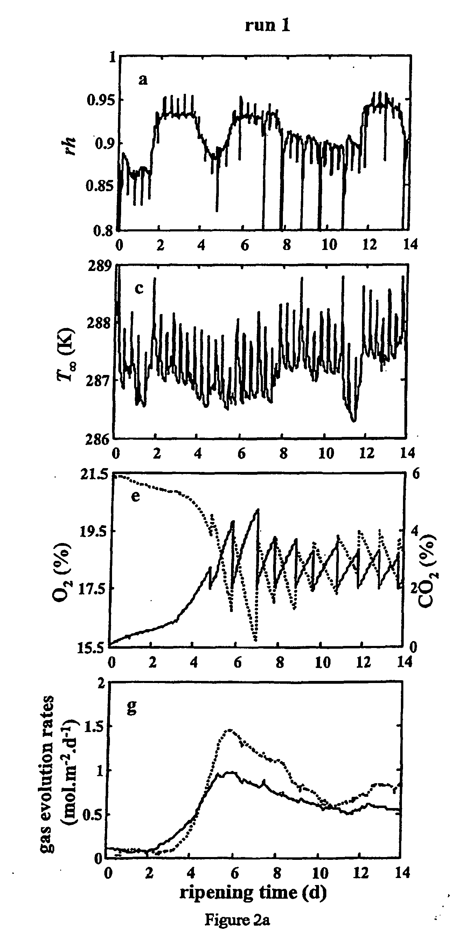

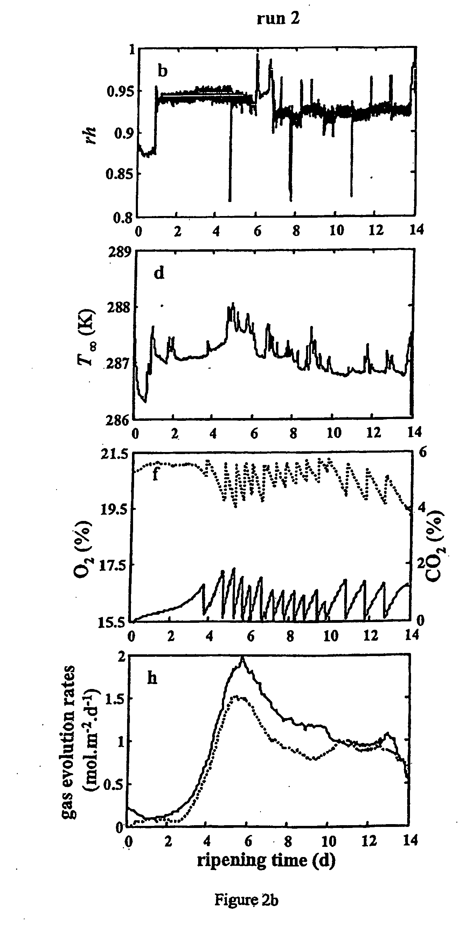

The figure 2 shows the data measured and calculated versus ripening time for run 1 (a, c, e, g) and run 2 (b, d, f, g). a, b: on-line measurement of ripening chamber relative humidity ($rh$), c, d: on-line measurement of the ripening chamber temperature ($T_\infty$), e, f: on-line measurement of the concentration of oxygen ($O_2$, dotted line) and carbon dioxide ($CO_2$, solid line) concentration, g, h: calculation of the oxygen production rate (dotted line) and the carbon dioxide consumption rate (solid line). To clarity reason, a one-day moving average filter to get noise reduction was used for the oxygen production rate and carbon dioxide consumption rate (g, h).

For the run 1 (figure 2, left part) the chamber temperature was between 286 and 289 K, as a function of a defrosting event performed automatically every 8 hours. This phenomenon induced also relative humidity variations, decreases for low relative humidity values and increases for high values. The dry air injections carried out in order to remove the $CO_2$, produced important relative humidity decreases (*e.g.* days 7 to 11 on figure 2.a). Added to these abrupt changes, manual low relative humidity variations between 88 and 94 % were carried out in order to study changes in the mass loss kinetic.

The run 2 (figure 2, right part) was carried out in a ripening chamber with an automated relative humidity control and without defrosting events. From day 0 to day 1 and from day 7 to the end of the run, the fan of the recirculation loop was stopped, and then the relative humidity regulation was carried out by natural convection. That implied two different airflows close to the cheeses (fan off and fan on).

Figure 2.g, h represents the oxygen consumption and the carbon dioxide production rates for the two runs. They were established from data shown in figure 2.e, f, respectively: gas rates were the first derivative of the gas concentrations according to time. During air injection time, the calculations were not done and interpolated values were used.

### Verification of the Model Hypotheses

### Water Activity.

The figure 1 shows the changes in the water activity of cheese surface versus ripening time. In the figure, (•) corresponds to the mean of 4 measurements performed on 2 faces of 2 cheeses during the run 1, and (-) correspond to the standard error of the mean.

The results established that the water loss along all the ripening process did not influence water activity ($a_w$). Most of the values were comprised between 0.969 and 0.984 and the average, equal to 0.976, could be used as the water activity value. Two phases with constant $a_w$ were observed (d0 to d6, $a_w = 0.973$ and d7 to d14, $a_w = 0.98$), probably because of the growth of micro flora and the increase of pH. Except on the first day, characterized by an increase of water activity values (from 0.969 to 0.977), the salt diffusion effect was not observed.

### Heat Transfer.

The model takes into account a temperature gradient between cheese surface and ripening chamber atmosphere due to respiratory metabolism.

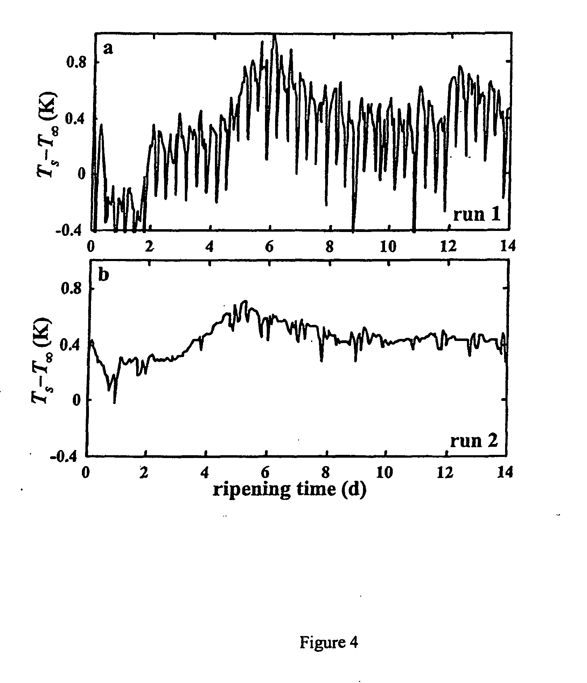

The figure 4 shows the difference between the recorded cheese surface temperature ($T_s$) and the atmospheric temperature ($T_\infty$) versus ripening time.

The temperature measurements performed on a cheese on each run checked this hypothesis (figure 4.a, b for the run 1 and 2, respectively). The gradient of temperature varied roughly from 0 to 0.8°C (run 1) and to 0.65°C (run 2). It increased with the biological activity with a maximum between day 5 and day 6 as observed for the gas exchanges (figure 2.g, h). Thus, the results clearly demonstrate that convective and radiative heat transfers and respiration heat have significant effects.

### Parameter Values.

Table I summaries the values of the parameters used for the mass loss estimation. The surface water activity ($a_w$) and the specific heat ($C$) of the cheese were determined from experimental measurements performed during the ripening (run 1). The cheese emissivity had been chosen equal to those of plaster (MIRADE *et al.,* 2004, abovementioned). The other parameters were obtained from the literature.

The only fitting procedure to find parameter value concerned the average convective heat transfer coefficient (table II). Three air flow conditions were considered: the run 1, the run 2 with a forced convection for the relative humidity regulation (fan on) and the run 2 with a free convection (fan off). Subsets of mass experimental measurements were used for fitting this parameter: - run 1 - d0 to d4, - run 2 (fan on) - d1 to d3, and - run 2 (fan off) - d7 to d9. The convective heat transfer coefficients were used according to equation (6) to determine the average water transfer coefficients.

### Mass Loss Estimation

With an initial mass of 330 g and 340 g for the run 1 and the run 2 respectively, the mass cheese dynamics were simulated during 14 days in the ripening chamber.

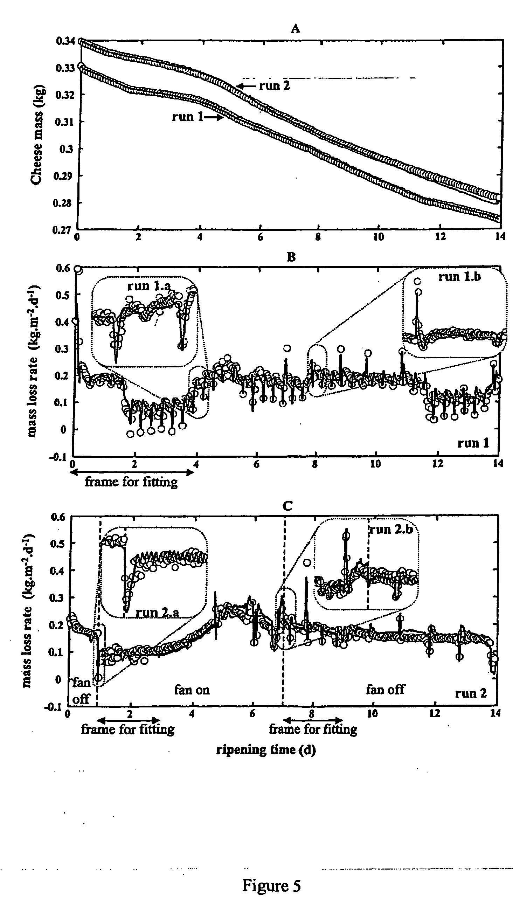

The figure 5 shows the evolution of mass loss during the ripening time. (A) Measured (O) and estimated (-) cheese mass loss versus ripening time for the runs 1 and 2. Only two hours mean values are represented for clarity reason. B, C: Measured (O) and estimated (-) cheese mass loss rate versus ripening time for the runs 1 (B) and 2 (C). Only two hours mean values are represented to clarity reason except for zoom insertions where the acquisition step is 6 minutes. Insertion run1.a: changes in mass loss during a defrosting event. Insertion run1.b: changes in mass loss during a dry air injection. Insertion run2.a: changes in mass loss during relative humidity setpoint and air flow velocity variations. Insertion run2.b: changes in mass loss during dry air injection and air flow velocity variations.

Surprisingly, and as shown on figure 5, it appears that the model was able to represent the global evolution of the cheese mass loss. Figure 5.A allows a comparison between the cheese masses measured by on-line weighting and calculated by the model. The corresponding mass loss rates are shown on figure 5.B and 5.C. The cheeses lost on average 4.1 g.d$^{-1}$ and 4.2 g.d$^{-1}$, with a total loss of 58 g and 59 g, for run 1 and run 2 respectively. The mass loss rate is very high (0.2 kg.m$^{-2}$.d$^{-1}$) when $rh$ = 85 % on day 1. Then, it decreased when $rh$ increased. For example, when the relative humidity setpoint changes rapidly from 85 % to 92 % (see zoom insertion run2.a, figure 5.C) the mass loss rate decreased of at least 50 %.

The mass loss rate increased again with the respiratory activity to reach about 0.25 kg.m$^2$.d$^{-1}$ when this activity was maximal (d5 and d6). After this step, and to the end of the ripening process, the mass loss rate decreased in the same way as the respiratory activity decreasing. This study obviously showed the mass loss accelerations close to day 4 were the consequence of the micro flora growth. For example, in the run 2, the mass loss rate changed from 100 g.m$^{-2}$.d$^{-1}$ to 180 g.m$^{-2}$.d$^{-1}$ between d2 and d4 with a constant relative humidity for this time frame. In the same period, the carbon loss changed from 1.2 g.m$^{-2}$.d$^{-1}$ (0.1 mol.m$^{-2}$.d$^{-1}$) to 9 g.m$^{-2}$.d$^{-1}$ (0.75 mol.m$^{-2}$.d$^{-1}$) (see figure 2.h). As a consequence, the mass loss rate changes could not be explained only by the carbon loss changes and the biological activities induced also water evaporation. This result showed that the biological activity had to be taken into account and was correctly represented by the model.

Finally, the residual (differences between observed and predicted values) at the end of the runs were - 0.09 g (0.17 % of the total mass loss) for the run 1 and -1.7 g (2.9 % of the total mass loss) for the run 2. The relative errors of the model, defined as the residual standard deviation divided by the value range, were equal to 0.65 % and 1.86 % for the mass, 2.13 % and 3.18 % for the mass loss rate, for run 1 and run 2 respectively. Another significant property of the model was to allow a good fitting between measured and calculated mass loss values for fast changes in the working conditions. For example, fast relative humidity changes linked to a defrosting event (see figure 5.B, zoom insertion run1.a) or to dry air injection (see figure 5.B, zoom insertion run1.b, and the left part of the zoom insertion run2.b) were correctly represented by the model. In fact, the general shape of the mass loss rate versus time is in good agreement with the changes in relative humidity.

Example 2 : validation of the model of cheese mass loss for the ripening of Camembert-type cheese

In order to confirm the model of cheese mass loss during ripening disclosed in the example 1, five trials of Camembert-type cheese ripening have been realised at different temperature and relative humidity conditions. The ripening chambers were as described previously. After a ripening period of 14 days, the cheese weight loss was determined and compared with the cheese weight loss value obtained with the model disclosed previously.

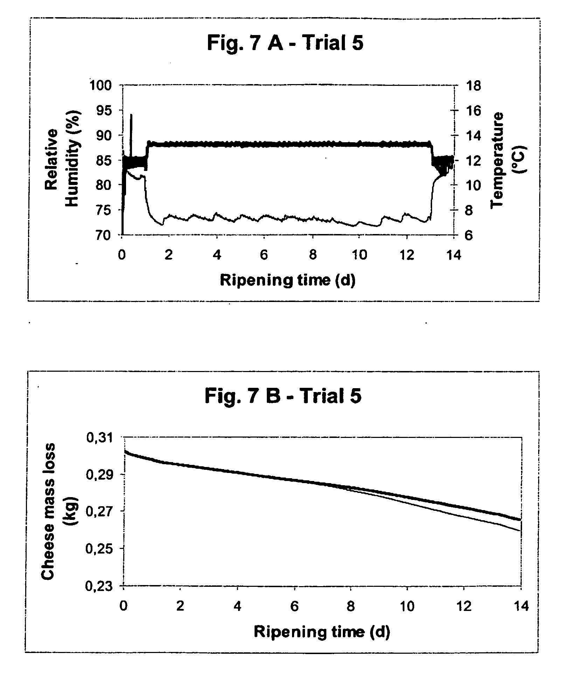

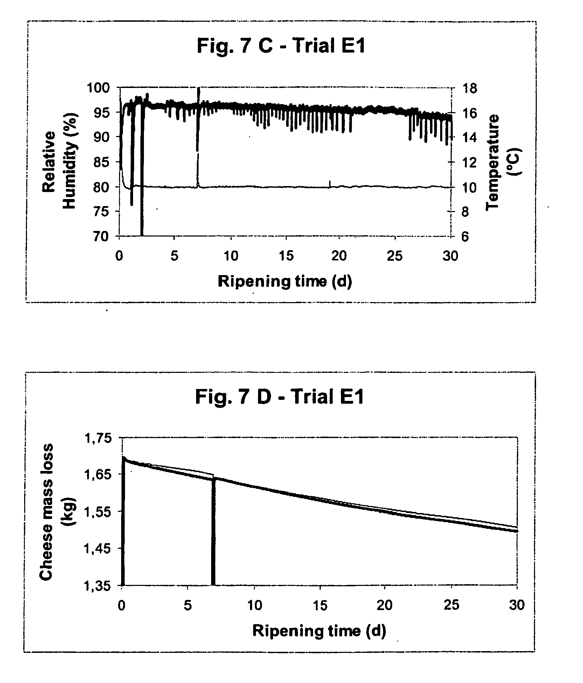

The conditions and results obtained for each of the 5 trials are summarized in table II, and Figure 7A - B is an example of recorded data during trial 1.

Table II

| Trials | Temperature (°C) | Relative humidity (%) | Measured total mass loss (g) | Estimated total mass loss (g) | Final mass difference (%) |
|---|---|---|---|---|---|
| 1 | 13 | 85-92 | 44 | 48 | 10 |
| 2 | 12-13 | 82-97 | 22 | 24.5 | 10 |
| 3 | 9-11 | 80-87 | 70 | 67.5 | 4 |
| 4 | 8 | 98 | 10 | 12 | 20 |
| 5 | 7 | 88 | 35 | 40 | 14 |

The results established that the cheese weight loss during the 14 days of ripening are comprised between 10 and 70 g depending on the experimental conditions, and essentially on the level of relative humidity.

The results confirmed that the validity of the prediction of cheese weight loss by the present model is excellent with a variance comprised between 4 and 14% between the measured and estimated cheese weight loss, excepted one condition showing a variance of 20%. Nevertheless, this particular condition is associated with the smallest cheese weight loss (i.e., 10g) because of a very high relative humidity (i.e., 98%) resulting a slightest precision of the estimation.

Finally, these results confirmed the pertinence of the developed model and enable its validation for the ripening of Camembert-type cheese in conditions usually used for this type of cheese.

Example 3: validation of the model of cheese mass loss for the ripening of Saint Nectaire-type cheese

In order to evaluate the model of cheese mass loss for other cheese type, different trials of Saint Nectaire-type cheese ripening have been realised at different temperature and relative humidity conditions. Saint Nectaire-type cheese has a different geometry than the one of Camembert-type cheese. In fact, their surface and diameter are nearly 4 and 2 fold greater respectively than those of Camembert-type cheese. The ripening period corresponds to 28 days and has been done in a ripening room of 3.07 m³ volume with a permanent (i.e., 100%) or sequential ventilation (i.e., 40 or 33% of the time of the ripening period). The cheese weight loss was determined at the end of the ripening period and compared with the cheese weight loss value obtained with the model disclosed previously.

The conditions and results obtained for each of the 5 trials are summarized in table III, and Figure 7C - D is an example of recorded data during trial E1.

Table III

| Trials | Ventilation time (%) | Temperature (°C) | Relative humidity (%) | Measured total mass loss (g) | Estimated total mass loss (g) | Final mass difference (%) |
|---|---|---|---|---|---|---|
| E1 | 100 | 10 | 94-97 | 202 | 191 | -5.45 |
| E2 | 100 | 10 | 93-96 | 163 | 171 | 4.82 |
| E3 | 40 | 10 | 87-96 | 213 | 205.5 | -3.51 |
| E4 | 33 | 13 | 93-98 | 230 | 276 | 20.0 |
| E5 | 33 | 7 | 87-93 | 228 | 261 | 14.4 |

The results established that the cheese weight loss during the 28 days of ripening are comprised between 163 and 230 g depending on the experimental conditions, and essentially on the level of relative humidity.

Finally, the results also confirmed that the predictions of cheese weight loss by the present model are excellent. More specifically, the trials done at 10°C show a variance comprised of nearly 10g (i.e., 5%) between the measured and estimated cheese weight loss. Nevertheless, and for the ripening done at 7 or 13°C, a more significant variance is observed establishing that the model is less adapted for more extreme temperature conditions.

Example 4: validation of the model of cheese mass loss for the ripening of Camenbert-type cheese in an especially designed "respiratory ripening chamber"

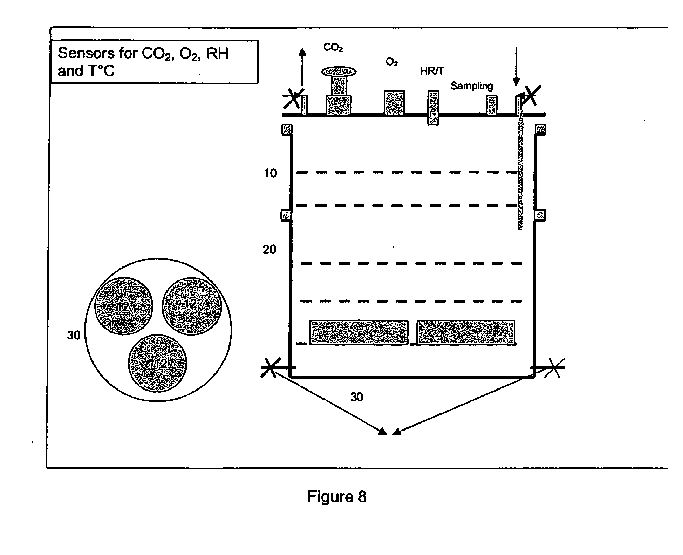

A "respiratory ripening chamber" (Figure 8) has been developed for determining with precision the respiratory activity of the cheese during ripening, which comprises (i) sensors for determining the temperature, the relative humidity, the $O_2$ and $CO_2$ concentration, and eventually the cheese mass; (ii) means for controlling the temperature and the relative humidity, and (iii) a computer program for analysing the obtained data for modelling the cheese mass loss.

Two trials of Camembert-type cheese ripening have been realised at different temperature and relative humidity conditions in this "respiratory ripening chamber". After a ripening period of 14 days, the cheese weight loss was determined and compared with the cheese weight loss value obtained with the model disclosed previously.

The conditions and results obtained for each of the 2 trials are summarized in table IV.

Table IV

| Trials | Temperature (°C) | Relative humidity (%) | Measured total mass loss (g) | Estimated total mass loss (g) | Final mass difference (%) |
|---|---|---|---|---|---|
| 1 | 6-8 | 90-97 | 44 | 44.3 | -0.7 |
| 2 | 8-10 | 88-97 | 37 | 35.3 | 4.7 |

The results confirmed that the prediction of cheese weight loss by the present model is excellent in the designed "respiratory ripening chamber" with a variance of less than 5% between the measured and estimated cheese weight loss.

**Claims**

1. A method for monitoring and modelling the cheese mass evolution during its ripening, **characterised in that** said method comprises the steps of:

(i) determining, with an appropriate mass sensor the cheese mass during its ripening in a ripening chamber;
(i') determining the relative humidity and the temperature in the ripening chamber with appropriate sensors; and
(i") determining the $CO_2$ and/or $O_2$ concentration(s) in the ripening chamber with appropriate sensor(s);

wherein the modelling of the cheese mass evolution during its ripening is obtained by the resolving of the following equations (1') and (3'):

$$\frac{dm}{dt} = -sk\left[a_w.p_{sv}\left(T_s\right) - rh.p_{sv}\left(T_\infty\right)\right] \quad -sw_C r_{CO_2} \tag{1'}$$

and

$$\frac{dT_s}{dt} = \frac{s}{mC}\left(h\left(T_\infty - T_s\right) \quad +\varepsilon\sigma\left(T_\infty^4 - T_s^4\right) \quad -\lambda k\left[a_w.p_{sv}\left(T_s\right) - rh.p_{sv}\left(T_\infty\right)\right] \quad +\alpha r_{CO_2}\right) \tag{3'}$$

which equations disclose respectively the evolution of the cheese mass (*dm*) and the evolution of the average cheese surface temperature (*dT$_s$*) as a function of time (*dt*), wherein:

* * *m* is the cheese mass (kg),
* * *t* is the time (s),
* * *s* (m$^2$) is the useful surface exchange of the cheese,
* * *k* is the average water transfer coefficient (kg.m$^{-2}$ .Pa$^{-1}$.s$^{-1}$),
* * *a$_w$* is the cheese surface water activity,
* * *p$_{sv}$(T$_*$)* is the saturation vapour pressure at the temperature *T$_*$*(Pa),
* * *T$_s$* and *T$_\infty$* are the average cheese surface and ripening chamber temperatures, respectively (K),
* * *rh* is the relative humidity (expressed between 0 and 1),
* * *w$_C$* is the molar masses (kg.mol$^{-1}$) of carbon, and
* * r$_{CO2}$ is the cheese $CO_2$ production rate (mol.m$^{-2}$.s$^{-1}$);
* * *C* is the cheese specific heat (J.kg$^{-1}$.K$^{-1}$),
* * *h* is the average convective heat transfer coefficient (W.m$^{-2}$.K$^{-1}$),
* * $\varepsilon$ is the cheese emissivity (dimensionless),
* * $\sigma$ is the Stefan-Boltzman constant (W.m$^{-2}$.K$^{-4}$),
* * $\alpha$ is the respiration heat for 1 mole of carbon dioxide release (J.mol$^{-1}$), and
* * $\lambda$ is the water latent vaporization heat (J.kg$^{-1}$),

2. The method according to claim 1, wherein said method is a method for manufacturing cheese having a final targeted mass value, and further comprising the step of (ii) modifying the relative humidity in the ripening chamber for obtaining this final targeted cheese mass value, wherein this modification of the relative humidity of the ripening chamber for obtaining this final targeted cheese mass value is obtained by the resolving the equations.

3. The method according to claim 2, wherein the humidity in the ripening chamber is modified at step (ii) from less than 3%, preferably from less than 2%.

4. The method according to any one of claims 1 to 3, wherein the ripening chamber has defined temperature (*T$_\infty$*) and relative humidity (*rh*).

5. The method according to claim 4, wherein the defined temperature and the humidity in the ripening chamber are maintained with appropriate means.

6. The method according to any one of claims I to 5, wherein the steps (i), (i'), (i"), and (ii) are automated.

7. The method according to any one of claims 1 to 6, wherein the modelling of the cheese mass evolution during its ripening is obtained by the resolving of the following equations (1) and (3):

$$\frac{dm}{dt} = s\left(w_{O_2}.r_{O_2} - w_{CO_2}.r_{CO_2} - k\left(a_w.p_{sv}(T_s) - rh.p_{sv}(T_\infty)\right)\right) \quad (1)$$

and

$$\frac{dT_s}{dt} = \frac{s}{m \cdot C}\left(h(T_\infty - T_s) + \varepsilon\sigma\left(T_\infty^4 - T_s^4\right) - \lambda k\left(a_w.p_{sv}(T_s) - rh.p_{sv}(T_\infty)\right) + a\frac{r_{O_2} + r_{CO_2}}{2}\right) \quad (3)$$

which equations disclose respectively the evolution of the cheese mass (*dm*) and the evolution of the average cheese surface temperature (*dT$_s$*) as a function of time (*dt*), wherein:

 * $w_{O2}$ and $w_{CO2}$ are the molar masses (kg.mol$^{-1}$) of oxygen and of carbon dioxide respectively, and
 * $r_{O2}$ is the cheese $O_2$ consumption rate (mol.m$^{-2}$.s$^{-1}$).

8. A computer program for controlling a computer to perform a method as claimed in any one of claims 1 to 7.

9. A computer readable medium containing a computer program as claimed in claim 8.

**Patentansprüche**

1. Verfahren zum Überwachen und Modellieren der Entwicklung der Käsemasse während ihrer Reifung, **dadurch gekennzeichnet, dass** das Verfahren die folgenden Schritte umfasst:

 (i) Bestimmen mit einem geeigneten Massesensor der Käsemasse während ihrer Reifung in einer Reifungskammer;
 (i') Bestimmen der relativen Luftfeuchtigkeit und der Temperatur in der Reifungskammer mit geeigneten Sensoren; und
 (i'') Bestimmen der $CO_2$ und/oder $O_2$ Konzentration(en) in der Reifungskammer mit geeigneten Sensor(en);

wobei das Modellieren der Entwicklung der Käsemasse während ihrer Reifung durch das Lösen der folgenden Gleichungen (1') und (3') erreicht wird:

$$\frac{dm}{dt} = -sk\left[a_w.p_{sv}(T_s) - rh.p_{sv}(T_\infty)\right] - sw_C r_{CO_2} \quad (1')$$

und

$$\frac{dT_s}{dt} = \frac{s}{mC}\left(h(T_\infty - T_s) + \varepsilon\sigma\left(T_\infty^4 - T_s^4\right) - \lambda k\left[a_w.p_{sv}(T_s) - rh.p_{sv}(T_\infty)\right] + ar_{CO_2}\right) (3')$$

wobei die Gleichungen die Entwicklung der Käsemasse (*dm*) beziehungsweise die Entwicklung der mittleren Temperatur der Käseoberfläche (*dT$_s$*) als eine Funktion der Zeit (*dt*) offenbaren, wobei:

 - *m* die Käsemasse (kg) ist,
 - *t* die Zeit (s) ist,

- $s$(m$^2$) der verwendbare Oberflächenaustausch des Käses ist,
- $k$ der mittlere Wasserübergangskoeffizient (kg.m$^{-2}$.Pa$^{-1}$.s$^{-1}$) ist,
- $\alpha_w$ die Käseoberflächenwasseraktivität ist,
- $p_{sv}(T_x)$ der Sättigungsdampfdruck bei der Temperatur $T_x$(Pa) ist,
- $T_s$ und $T_\infty$ die mittleren Käseoberflächen- und Reifungskammertemperaturen, jeweils (K), sind,
- $rh$ die relative Luftfeuchtigkeit (ausgedrückt zwischen 0 und 1) ist,
- es sich bei $w_C$ um die Molmassen (kg.mol$^{-1}$) von Kohlenstoff handelt, und
- $r_{CO2}$ die CO$_2$-Produktionsrate (mol.m$^{-2}$.s$^{-1}$) des Käses ist;
- $C$ die spezifische Wärme (J.kg$^{-1}$.K$^{-1}$) des Käses ist,
- h der mittlere Konvektionswärmeübergangskoeffizient (W.m$^{-2}$.K$^{-1}$) ist,
- $\varepsilon$ die Emissivität (dimensionslos) des Käses ist,
- $\sigma$ die Stefan-Boltzman-Konstante (W.m$^{-2}$.K$^{-4}$ ) ist,
- $\alpha$ die Respirationswärme für 1 Mol Kohlendioxidfreisetzung (J.mol$^{-1}$) ist, und
- $\lambda$ die latente Wasserverdampfungswärme (J.kg$^{-1}$) ist.

2. Verfahren nach Anspruch 1, wobei das Verfahren ferner ein Verfahren zur Herstellung von Käse mit einem Endzielmassewert ist und ferner den Schritt (ii) des Modifizierens der relativen Luftfeuchtigkeit in der Reifungskammer zum Erhalten dieses Endzielmassewerts umfasst, wobei diese Modifikation der relativen Luftfeuchtigkeit der Reifungskammer zum Erhalten dieses Endzielmassewerts durch das Lösen der Gleichungen erreicht wird.

3. Verfahren nach Anspruch 2, wobei die Feuchtigkeit in der Reifungskammer bei Schritt (ii) von weniger als 3 % und vorzugsweise von weniger als 2 % modifiziert wird.

4. Verfahren nach einem der Ansprüche 1 bis 3, wobei die Reifungskammer eine definierte Temperatur ($T_\infty$) und relative Luftfeuchtigkeit ($rh$) aufweist.

5. Verfahren nach Anspruch 4, wobei die definierte Temperatur und die Feuchtigkeit in der Reinigungskammer mit geeigneten Mitteln aufrechterhalten werden.

6. Verfahren nach einem der Ansprüche 1 bis 5, wobei die Schritte (i), (i'), (i'') und (ii) automatisiert sind.

7. Verfahren nach einem der Ansprüche 1 bis 6, wobei das Modellieren der Entwicklung der Käsemasse während ihrer Reifung durch das Lösen der folgenden Gleichungen (1) und (3) erreicht wird:

$$\frac{dm}{dt} = s\left( w_{O_2} \cdot r_{O_2} - w_{CO_2} \cdot r_{CO_2} - k\left( a_w \cdot p_{sv}(T_s) - rh \cdot p_{sv}(T_\infty) \right) \right) \quad (1)$$

und

$$\frac{dT_s}{dt} = \frac{s}{m \cdot C}\left( h(T_\infty - T_s) + \varepsilon\sigma\left( T_\infty^4 - T_s^4 \right) - \lambda k\left( a_w \cdot p_{sv}(T_s) - rh \cdot p_{sv}(T_\infty) \right) + \alpha \frac{r_{O_2} + r_{CO_2}}{2} \right) \quad (3)$$

wobei die Gleichungen die Entwicklung der Käsemasse ($dm$) beziehungsweise die Entwicklung der mittleren Temperatur der Käseoberfläche ($dT_s$) als eine Funktion der Zeit ($dt$) offenbaren, wobei:

- $w_{O2}$ und $w_{CO2}$ die Molmassen (kg.mol$^{-1}$) von Sauerstoff beziehungsweise Kohlendioxid sind, und
- $r_{CO2}$ die O$_2$-Verbrauchsrate (mol.m$^{-2}$.s$^{-1}$) des Käses ist.

8. Computerprogramm zum Steuern eines Computers zum Durchführen eines Verfahrens nach einem der Ansprüche 1 bis 7.

9. Computerlesbares Medium, das ein Computerprogramm nach Anspruch 8 enthält.

**Revendications**

1. Procédé de surveillance et de modélisation de l'évolution d'une masse de fromage pendant sa maturation, **caractérisé en ce que** ledit procédé comprend les étapes de :

   (i) détermination, par un capteur de masse approprié, de la masse de fromage pendant sa maturation dans une chambre de maturation ;
   (i') détermination de l'humidité relative et de la température dans la chambre de maturation par des capteurs appropriés ; et
   (i'') détermination de la ou des concentrations de $CO_2$ et/ou d'$O_2$ dans la chambre de maturation par un ou des capteurs appropriés ;

   dans lequel la modélisation de l'évolution d'une masse de fromage pendant sa maturation est obtenue par la résolution des équations (1') et (3') suivantes :

$$\frac{dm}{dt} = -sk\left[a_w.p_{sv}\left(T_s\right) - rh.p_{sv}\left(T_\infty\right)\right] \quad -sw_C r_{CO_2} \tag{1'}$$

   et

$$\frac{dT_s}{dt} = \frac{s}{mC}\left(h\left(T_\infty - T_s\right) \quad +\varepsilon\sigma\left(T_\infty^4 - T_s^4\right) \quad -\lambda k\left[a_w.p_{sv}\left(T_s\right) - rh.p_{sv}\left(T_\infty\right)\right] \quad +\alpha r_{CO_2}\right) \tag{3'}$$

   lesquelles équations présentent respectivement l'évolution de la masse de fromage (dm) et l'évolution de la température moyenne en surface du fromage (dT$_s$) en fonction du temps (dt), où :

   * m est la masse de fromage (kg),
   * t est le temps (s),
   * s(m$^2$) est la surface d'échange utile du fromage,
   * k est le coefficient de transfert d'eau moyen (kg.m$^{-2}$.Pa$^{-1}$.s$^{-1}$),
   * $a_w$ est l'activité de l'eau en surface du fromage,
   * $p_{sv}(T_x)$ est la pression de vapeur de saturation à la température $T_x$ (Pa),
   * $T_s$ et $T_\infty$ sont respectivement les températures moyennes en surface du fromage et de la chambre de maturation (K),
   * rh est l'humidité relative (exprimée entre 0 et 1),
   * $w_c$ est la masse molaire (kg.mol$^{-1}$) du carbone, et
   * $r_{CO2}$ est la vitesse de production de $CO_2$ du fromage (mol.m$^{-2}$.s$^{-1}$);
   * C est la chaleur spécifique du fromage (J.kg$^{-1}$.K$^{-1}$),
   * h est le coefficient moyen de transfert de chaleur par convection (W.m$^{-2}$.K$^{-1}$),
   * $\varepsilon$ est l'émissivité du fromage (sans dimension),
   * $\sigma$ est la constante de Stefan-Boltzman (W.m$^{-2}$.K$^{-4}$),
   * $\alpha$ est la chaleur de respiration pour 1 mole de dioxyde de carbone libérée (J.mol$^{-1}$), et
   * $\lambda$ est la chaleur de vaporisation latente de l'eau (J.kg$^{-1}$).

2. Procédé selon la revendication 1, dans lequel ledit procédé est un procédé pour fabriquer du fromage ayant une valeur de masse ciblée finale, et comprenant en outre l'étape de (ii) modification de l'humidité relative dans la chambre de maturation pour obtenir cette valeur de masse de fromage ciblée finale, dans lequel cette modification de l'humidité relative de la chambre de maturation pour obtenir cette valeur de masse de fromage ciblée finale est obtenue en résolvant les équations.

3. Procédé selon la revendication 2, dans lequel l'humidité dans la chambre de maturation est modifiée à l'étape (ii) de moins de 3 %, de préférence de moins de 2 %.

**4.** Procédé selon l'une quelconque des revendications 1 à 3, dans lequel la chambre de maturation a une température ($T_\infty$) et une humidité relative (rh) définies.

**5.** Procédé selon la revendication 4, dans lequel la température et l'humidité définies dans la chambre de maturation sont maintenues par des moyens appropriés.

**6.** Procédé selon l'une quelconque des revendications 1 à 5, dans lequel les étapes (i), (i'), (i") et (ii) sont automatisées.

**7.** Procédé selon l'une quelconque des revendications 1 à 6, dans lequel la modélisation de l'évolution d'une masse de fromage pendant sa maturation est obtenue par la résolution des équations (1) et (3) suivantes :

$$\frac{dm}{dt} = s\left( w_{O_2} \cdot r_{O_2} - w_{CO_2} \cdot r_{CO_2} - k\left( a_w \cdot p_{sv}\left(T_s\right) - rh \cdot p_{sv}\left(T_\infty\right)\right)\right) \quad (1)$$

et

$$\frac{dT_s}{dt} = \frac{s}{m \cdot C}\left( h\left(T_\infty - T_s\right) + \varepsilon\sigma\left(T_\infty^4 - T_s^4\right) - \lambda k\left(a_w \cdot p_{sv}\left(T_s\right) - rh \cdot p_{sv}\left(T_\infty\right)\right) + a\frac{r_{O_2} + r_{CO_2}}{2}\right) \quad (3)$$

lesquelles équations présentent respectivement l'évolution de la masse de fromage (dm) et l'évolution de la température moyenne en surface du fromage ($dT_s$) en fonction du temps (dt), où :

* $w_{O2}$ et $w_{CO2}$ sont respectivement les masses molaires (kg.mol$^{-1}$) de l'oxygène et du dioxyde de carbone, et
* $r_{O2}$ est la vitesse de consommation d'$O_2$ du fromage (mol.m$^{-2}$.s$^{-1}$).

**8.** Programme d'ordinateur pour commander un ordinateur pour effectuer un procédé selon l'une quelconque des revendications 1 à 7.

**9.** Support pouvant être lu par un ordinateur contenant un programme d'ordinateur selon la revendication 8.

Figure 1

run 1

Figure 2a

run 2

Figure 2b

Figure 3

Figure 4

Figure 5

Figure 6

Fig. 7 A - Trial 5

Fig. 7 B - Trial 5

Fig. 7 C - Trial E1

Fig. 7 D - Trial E1

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0405692 A1
- EP 0307049 B1
- US 5028443 A
- FR 2841736 B1
- FR 2841736

### Non-patent literature cited in the description

- **CHOISY et al.** Cheesemaking, from Science to Quality Assurance. Lavoisier Publishing, 2000, 82-151
- **RAMET et al.** Cheesemaking, from Science to Quality Assurance. Lavoisier Publishing, 2000, 418-446
- **PICQUE et al.** *J. Dairy Sci.,* 2006, vol. 89, 3250-3259
- *Deutsche Molkerei Zeitung DMZ,* 1990, vol. 111 (15), 472475
- **RIAHI et al.** *International Dairy Journal,* 2007, vol. 17, 946-953
- **MARQUARDT.** *SIAM J. Appl. Math.,* 1963, vol. 11, 431-441
- General meteorological standards and recommended practices, Appendix A, corrigendum. WMO Technical Regulations. World Meteorological Organization, 2000, vol. 49
- **PERRY ; GREEN.** Perry's Chemical Engineers' Handbook. McGraw-Hill, 1997
- **KANG ; LEE.** *J. Food Eng.,* 1998, vol. 35, 65-73
- **LECLERCQ-PERLAT et al.** *J. Dairy Res.,* 2004, vol. 71, 346-354
- **HARRIS et al.** *J. Food Eng.,* 2004, vol. 61, 421-429
- **CHIRIFE ; IGLESIAS.** *J. Food Tech.,* 1978, vol. 13, 159-174
- **RÜEGG ; BLANC.** *J. Dairy Sci..,* 1976, vol. 59, 1019-1024
- **SAUREL et al.** *J. Food Eng.,* 2004, vol. 63, 163-170
- **Hardy.** Cheesemaking, from Science to Quality Assurance. Lavoisier Publishing, 2000, 60-81
- **DESOBRY ; HARDY.** *J. Food Sci.,* 1994, vol. 59, 986-989
- **HARDY.** *Sci. Aliments.,* 1985, vol. 5, 153-162
- **BLANC et al.** *Schweiz. Milchw. Forsch.,* 1983, vol. 12 (2), 30-34
- **HARDY ; SCHER.** Cheesemaking, from Science to Quality Assurance. Lavoisier Publishing, 2000, 447-473
- **PAJONK.** *J. Food Eng.,* 2003, vol. 57 (2), 231-243
- **SONG et al.** *J. Food Eng.,* 2002, vol. 53, 103-109
- **KONDJOYAN ; DAUDIN.** *J. Food Eng.,* 1997, vol. 32, 255-240
- **OZISIK.** Heat transfer: a basic approach. McGraw-Hill, 1985